# EUROPEAN PATENT APPLICATION

(11) **EP 1 557 571 A2**
(43) Date of publication of application: **27.07.2005**
(21) Application number: 05100256.6
(22) Date of filing: 17.01.2005
(51) Int. Cl.: F15B 15/22, F16F 7/00

(54) **Cushioning element, cushioning arrangement and fluid cylinder**

(30) Priority: 24.01.2004 DE 102004003653
(71) Applicant: Bosch Rexroth Teknik AB, 125 81 Stockholm (SE)
(72) Inventor: Austrell, Per-Erik, 216 12, Malmö (SE); Stenbom, Björn, 126 37, Hägersten (SE)
(74) Representative: Kietzmann, Lutz

(57) **Abstract**

The object of the present invention relates to a cushioning element (3), a cushioning arrangement (1) comprising a cushioning element (3), and a fluid cylinder comprising a cushioning arrangement (1) with a cushioning element (3) for use in a recess (4) of a housing (2) surrounding said recess (4) by circumferential side walls (5) and a bottom wall (6), comprising a deformable elastic oblong body with a surrounding wall, a first and a second front wall (7, 8) spaced along a longitudinal axis (L), suitable for being at least partly arranged in said recess (4), whereby the body is able to deform at least partly into said recess (4), whereby the body in its unstressed, initial condition comprises means for gradually expanding substantially in radial direction when being stressed along its longitudinal axis (L) and limited by said recess (4), so that in its final condition a substantially cylindrical deformable body is achieved.

## Description

The present invention relates to a cushioning element, a cushioning arrangement comprising a cushioning element, and a fluid cylinder comprising a cushioning arrangement with a cushioning element for use in a recess of a housing, comprising a deformable elastic oblong body with a surrounding wall, a first and a second front wall spaced along a longitudinal axis, suitable for being at least partly arranged in said recess, whereby the body is able to deform at least partly into said recess.

Cushioning elements are usually used in a wide area of automation applications. Such elements are frequently used for example in fluid cylinders, where the movement of a piston, especially when arriving at its end position has to be cushioned before colliding with a surrounding cylinder or a cylinder wall. Cushioning could be achieved inter alia by a fluid or by an elastic body made of an elastic material.

Such cushioning elements are well known and sometimes related to as shock absorber. For example a cushioning element for use in a cylindrical recess is realized by an elastic body, which in its unstressed condition is substantially cylindrically shaped with its ends being tapered, having two guiding rings located near the ends of the cushioning element for contacting the side wall or circumferential wall of the recess and guiding the body during its deformation inside the recess.

This well known cushioning element or cushioning arrangement respectively has the drawback, that if being stressed, the deformation of said cushioning element does not involve the whole cushioning element, so that the recess it is located in is not completely filled due to canting of said guiding rings, whereby said canting of the guiding rings causes strong forces towards the side wall of the recess, with the result that the deformation is stopped early and unpredictably and the side wall of the recess is strongly worn, which leads easily to malfunctioning.

Therefore it is an object of the present invention to provide a cushioning element, a cushioning arrangement with a cushioning element, and a fluid cylinder comprising a cushioning arrangement with a cushioning element, which has a predictable stopper function, which has a long durability, and which guarantees a reproducible functioning, whereby a gradually and continuing deformation is realized, so that a maximum cushioning stroke for smooth cushioning function at low volume is achieved.

This issue is addressed by a cushioning element according to the preamble of claim 1, by a cushioning arrangement according to the preamble of claim 7, and by a fluid cylinder according to the preamble of claim 14, all in conjunction with the features of their characterizing portions.

To achieve the foregoing and other objectives of the present invention the technical teachings include, that the body in its unstressed, initial condition is arranged for gradually expanding substantially in radial direction when being stressed along its longitudinal axis and limited by said recess, so that in its final or end condition a deformable body substantially shaped as the recess is achieved. By gradually deforming in said recess, the deformable body expands smoothly towards its surrounding side walls, whereby no or nearly no wear results. Additional the deformable body fits into the recess such, that no space is left in the recess, whereby an optimized cushioning stroke at low body-volume can be realized. The deformable elastic body preferably is made of a material selected from the group of deformable elastic materials including rubber, whereby the material has the characteristics of an incompressible material.

The cushioning element is used in a recess. The recess can have any form or shape, for example a substantially cylindrically shape or a substantially conically shape.

If used in a cylindrically shaped recess, another advantage of the present invention is, that the body comprises at least a first portion, substantially conically shaped in the body's initial condition, whereby the first portion starts at the first front wall and tapers from the first front wall towards the second front wall of the body ending at a predetermined distance from the first front wall, being at least partly arranged in said recess. The cushioning element or more precisely at least the first portion of the cushioning element is arranged in the recess such, that the first front wall of the cushioning element contacts the bottom wall of the recess. The diameter of the first front wall and the diameter of the bottom wall are approximately the same. In direction towards the second front wall the diameter of the first portion of the cushioning element continuously decreases, so that a conically shaped form is realized. When being stressed and therefore being deformed, the conically shaped form expands mainly in radial direction, starting at the first front wall and gradually continuing in longitudinal direction. The first portion begins at the first front wall end and ends at a predetermined distance along the longitudinal axis.

If used in a conically shaped recess, it is further an advantage of the invention, that the body comprises at least a first portion, substantially cylindrically shaped in its initial condition, being at least partly arranged in said recess. As the substantially conically shaped first portion, the substantially cylindrically shaped portion expands mainly in radial direction, gradually filling the recess in which the first portion is located in. The body can comprise further portions. The first portion has to be shaped corresponding to the recess the body or the first portion is located in.

The body at least has a first portion which can extend from the first front wall to the second front wall, so that no further portions exist. Preferably the body has at least one, more preferable at least two, and most preferably at least three portions.

Preferably said body further comprises a second portion, in the initial condition shaped as a bolt head ending up in said second front wall and having a larger cross-sectional area than the recess of said housing functioning as a stopper for limiting the deformation of said elastic body. Due to this shape the second portion guarantees a predictable stopper function with an exact defined cushioning stroke. Although the second portion is involved in the deformation of said elastic body, the diameter of said second portions stays larger than the diameter of said recess, so that the stopper function is guaranteed. Alternatively the stopper function can be realized by construction the body in relation to the recess of the housing such, that the volume of the body is larger than the volume of the recess. So when compressed, the body completely fills the recess and extends from the recess, so that a buffer portion sandwich-like between the housing and a piston, exists.

Another advantage of the invention is, that said body further comprises a third portion, in its initial position cylindrically shaped, coaxially arranged between and coupling the first and the second portion, whereby the third portion is at least partly extruding from said recess to the outside of said housing for realizing a cushioning stroke, whereby the cross-sectional area of said third portion is smaller than that of said recess. This cylindrical shape realizes an optimized length-volume-ratio, so that with a minimum of volume a maximum length is realized. An optimized length is needed for realizing a longer cushioning way resulting in a smooth cushioning. If a cylindrically shaped first portion is used, the body does not has to have a third portion. In this case first an third portion unites in one portion, here the first portion.

One further advantage of the present invention is, that said body is shaped annularly having a through-going opening aligned with said longitudinal axis. By having a ring-like shape the body can be used in an annularly shaped recess. Forming a annularly shaped body saves material and weight.

To achieve the foregoing and other objectives of the present invention the technical teachings further include a cushioning arrangement comprising a deformable element and a housing with a recess for at least partly accommodating said element, a circumferential side wall surrounding that recess in radial direction, and a bottom wall for limiting said recess in one longitudinal direction, whereby said deformable element is at least partly arranged in said recess and whereby said deformable element is a cushioning element. This has the advantage that a small and easy to produce cushioning arrangement for end position cushioning is provided. By using such an arrangement it is guaranteed that the cushioning element works only in definite strain levels, which prolongs the durability of that cushioning element.

Advantageously the recess is substantially cylindrical and the body of the cushioning element has a substantially conically shaped first portion at least partly arranged in said recess. By this combination of a cylindrical recess and a conical first portion a gradually filling of said recess is guaranteed when stressing the body, whereby the recess is filled without stopping before being completely filled.

Another advantage of the present invention is, that the recess is substantially conical and the body of the cushioning element has a substantially cylindrically shaped first portion at least partly arranged in said recess. This is an alternative to the aforementioned cushioning arrangement. The cushioning element or the body has to be arranged according to the form of the recess. When being used in or for a conical recess, the body or its first portion is preferably shaped cylindrically to achieve a gradually and complete filling of the recess. Of course a body having a conical first portion can also be used in a conical recess.

In general all shapes of recesses can be used with a corresponding body, whereby the body has to have a shape, gradually filling the recess completely. Advantageously the above mentioned combinations cylindrical recess - conical first portion and conical recess - cylindrical first portion are preferred. But also the combination conical recess - conical first portion as well as any other combination is possible for filling the recess gradually under stress, presumed the body, that is the further portions, are constructed in a suitable manner as described herein. For manufacturing reasons the three combinations mentioned above are preferred.

Preferably the first portion of said cushioning element is at least partly coaxially arranged in said recess even when not being stressed, whereby the first front wall of said cushioning element contacts the bottom wall of said recess. The first portion works as a spring. When compressed it will gradually fill the space in that recess from the bottom wall up. Therefore there is no or little motion between that first portion and the side wall(s), so that wear as well as local strain concentrations are eliminated.

Preferably the first and/or third portion in its initial condition, that is when not being stressed, at least partly extrudes from said recess, whereby the first and/or third portion is coaxially arranged to the longitudinal axis of said recess. If used in a cylindrical recess the third portion has nearly the same shape as the recess with the exemption, that its diameter and volume are smaller than the diameter and the volume of the recess respectively, so that this portion together with the first portion completely fits into said recess. The cushioning stroke of said cushioning arrangement mainly depends on the length of said third portion. The length of said third portion depends on the volume of the recess, the volume of the first portion and the diameter of said third portion. Thus the cushioning stroke can be determined by the aforementioned parameter, whereby the diameter of said third portion must be sufficiently dimensioned to establish a sufficient stability. If used in a conical recess first and third portions unites in one portion, that is the first and third portion or just the first portion because no visible boundary between first portion and third portion usually exists.

One the invention advancing measure is that said second portion in its initial condition is spaced to and arranged completely outside the recess, whereby its diameter or its cross-sectional area is larger that the diameter or the cross-sectional area of the recess, regardless whether being stressed or not, so that the second portion functions as a stopper. The bolt nut shaped or hat-like shaped second portion protects the cushioning element against overload and realizes an end position for the arrangement in relation to predetermined compressive forces. As mentioned before, the stopper function also can be realized by constructing the body with a volume that is larger than the volume of the recess.

Advantageously said cushioning element in its final or end condition is essentially shaped as the recess when being arranged in said recess and longitudinal stressed, so that at least partly the first and/or the third portion completely fill the recess. By this deformation in the end condition of the cushioning process the shape of the cushioning element substantially equals the shape of the recess, so that an optimized cushioning is realized, whereby the total volume of the recess is used for deformation. The protruding part of the second portion, or, in case no second part exists the protruding part of the first and/or third portion, realizes the stopper function as mentioned before.

The body itself can have recesses in its unstressed condition. These recesses can be necessary for realizing very long cushioning length that means a very long body. The longer said body is, the larger it's volume is. Because the volume of the recess of the housing is limited, recesses formed in the body reduces the volume of the body. Thereby long bodies with long cushioning ways and low volume can be realized.

To achieve the foregoing and other objectives of the present invention the technical teachings include furthermore a fluid cylinder with end position cushioning comprising a cushioning arrangement. This realizes a small-sized, easy to produce fluid cylinder with end position cushioning, whereby the effort for maintenance is reduced.

Other aspects and advantages of the invention will become apparent from the following description, taken in conjunction with the accompanying drawings, illustrating by way of example the principles of the invention. The invention will now be described at the background of an embodiment and with reference to the drawings, wherein
- Fig. 1: shows schematically in a longitudinal cross-sectional view a cushioning arrangement in its initial condition;
- Fig. 2: shows schematically the cushioning arrangement in its end position;
- Fig. 3: shows schematically a cushioning arrangement according to fig. 1, whereby the cushioning element has no second portion;
- Fig. 4: shows a schematically in a longitudinal cross-sectional view a cushioning arrangement in its initial condition, whereby the recess is substantially conically shaped;
- Fig. 5: shows schematically in a perspective view a cushioning arrangement with an annularly, cylindrically shaped recess and a annularly shaped cushioning element without second portion; and
- Fig. 6: shows schematically in a perspective view a cushioning arrangement with a annularly, conically shaped recess and an annularly shaped cushioning element without second portion.

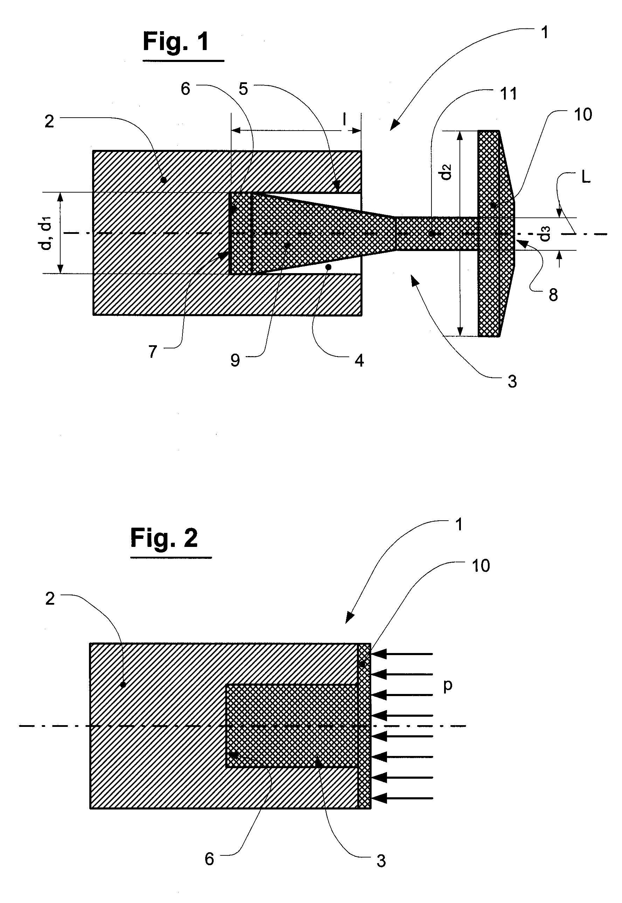

Fig. 1 schematically illustrates a cushioning arrangement 1 comprising a housing 2 and an unstressed cushioning element 3. The housing 2 has a cylindrical recess 4 that is surrounded by a circumferential side wall 5 and a bottom wall 6, both defining the recess 4. The recess 4 has a constant diameter *d* and a length *l*. Resulting from that diameter *d* and that length *l,* the recess has a cross-sectional area *A* = *π*/₄· *d*² and a volume *V* = *A · l*. In the recess 4 a cushioning element 3 is at least partly arranged. The cushioning element 3 comprises a deformable elastic oblong body with a surrounding wall, a first front wall 7 and a second front wall 8. That body is coaxially arranged in that recess 4 with the first front wall 7 contacting the bottom wall 6. Said elastic body is made up of three portions: a first portion 9 at the first front wall side, a second portion 10 at the second front wall side, and a third portion 11 coupling the first portion 9 and the second portion 10. For illustrating purposes vertical lines are shown in fig. 1 and 2 in the cross-sectional areas of the cushioning element (although in technical drawings not visible), showing different sections of the cushioning element with different diameters. All three portions 9, 10, 11 are arranged coaxially. The first portion 9 has a substantially conical shape (although showing a minor cylindrical section), with a diameter *d*_{*1*} at the first front wall 7 being approximately equal to the diameter *d* of the recess 4 and tapering in direction to the second front wall 8. The third portion 11 is substantially cylindrically-shaped with a constant diameter *d*₃, whereby the diameter *d*₃ is approximately as big as the diameter of the first portion 9 at the opposite end of the front wall 7, so that the changeover from first portion 9 to third portion 11 is steady-going. The second portion 10 is shaped as a bolt nut and is connected to the third portion 11 by a step or a crank. The diameter *d*₂ of the second portion 10 is larger than the diameter *d* of the recess 4, so that the second portion 10 does not fit into that recess 4, even under stress, and so functioning as a stopper or stop position. The volume of the first portion *V*₁ and the volume of the third portion *v*₃ in sum is approximately as big as the volume *v* of the recess 4, so that under stress the cushioning element 3 deforms and fits with its first and third portion 9, 11 into said recess 4. The cushioning arrangement 1 under a stress situation is shown in fig. 2.

Fig. 2 schematically illustrates a cushioning arrangement 1 according to fig. 1 under a stress situation due to a pressure *p* (shown as arrows). In this fig. a pressure *p* forces the cushioning element 3 to deform. The deformation of the cushioning element 3 comprises a substantially shrinking in longitudinal direction and an expansion substantially in radial direction, whereby the deformation inside the housing 2 happens gradually. As a result of that gradually deformation of the cushioning element 3 the recess is completely filled by said cushioning element 3, more precisely by said first and third portion of said cushioning element 3. The pressure *p* also causes a deformation of the second portion 10 of said cushioning element 3, whereby the second portion 10 does not fit into said recess due to its larger dimension and its outwardly position towards the housing 2 and so functions as a stopper. The cushioning element 3 is arranged such, that when being stressed the deformation begins gradually, whereby the recess is substantially filled by said elastic body beginning from the bottom wall 6 towards the opening of the recess. So, when arriving in its end position, the cushioning element 3 completely fills the recess (4) without sticking or canting.

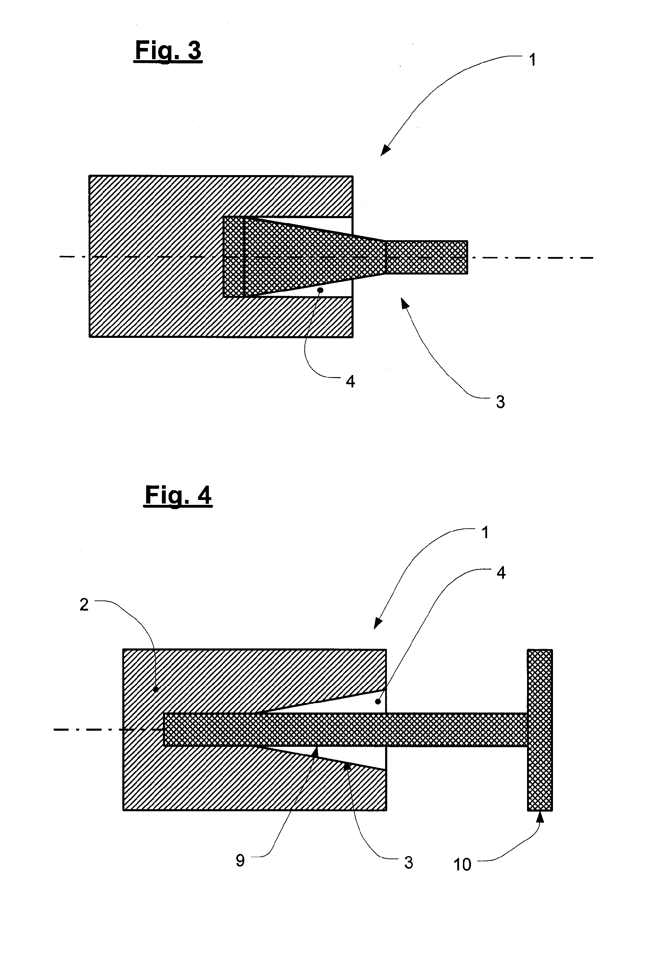

Fig. 3 shows schematically the cushioning arrangement 1 according to fig. 1 with the exception, that the cushioning element 3 or rather the body of the cushioning element has no second portion. In this case the stopper function is realized by the volume of the body, which is larger than the volume of the recess 4, so that, when being stressed, part of the compressed body protrudes from the recess 4. By this protruding part, the stopper function is realized.

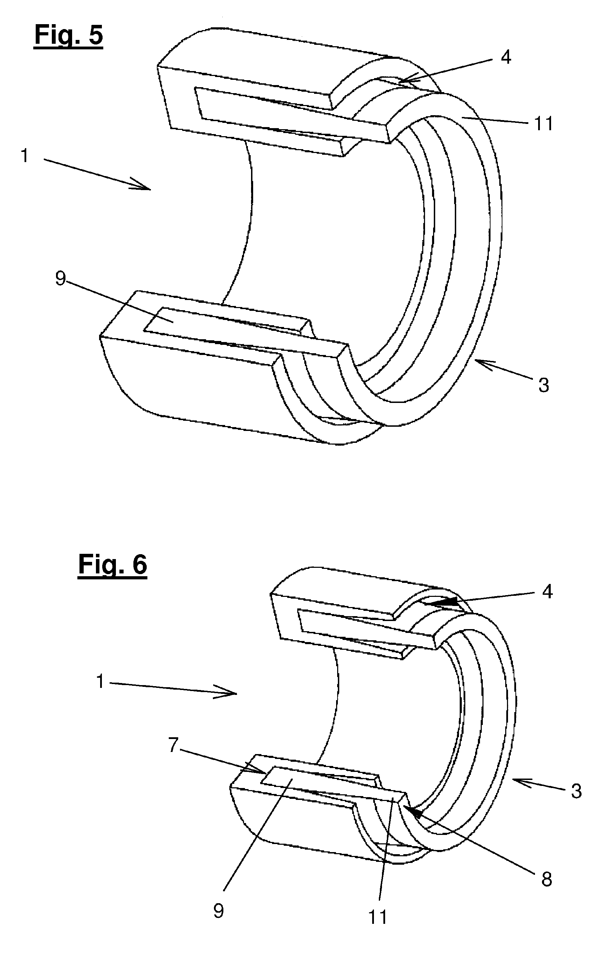

Fig. 4 shows schematically a cushioning arrangement 1 with a substantially conically shaped recess 4. The recess 4 tapers from the side facing the body to the inside of the housing 2, whereby the inner part of the recess 4 can have a minor cylindrical part for partly arranging a cylindrically shaped cushioning element 3 therein. The cushioning element 3 or the body has a first portion 9 which is cylindrically shaped and protrudes from the recess 4. At the second front wall 10 of the body a second portion 10 is arranged for realizing a stopper function as described before in relation to fig. 1.

Fig. 5 shows schematically in a perspective view a cushioning arrangement 1 with a ring-shaped recess 4 and an ring-shaped cushioning element 3 partly arranged inside said recess 4. The annular recess 4 has a constant outer and a constant inner diameter so that a substantially cylindrically shaped recess 4 is formed. The body of the cushioning element 3 has a first portion 9 and a third portion 11. The first portion 9 is conically shaped and the third portion 11 is cylindrically shaped. A second, bolt-head-like portion serving as a stopper is not necessary. The stopper function is realized by the construction of the body. More precisely the volume of the body is larger than the volume of the recess 4, so that when being stressed, the compressed body protrudes from the recess 4, so that the protruding part serves as a stopper.

Fig. 6 shows schematically in a perspective view another cushioning arrangement 1 with a ring shaped recess 4 and a ring-shaped cushioning element 3, partly arranged inside said recess 4. In difference to fig. 5 the annular recess 4 is substantially shaped conically, that means in direction from the inside of the housing to the outside the outer diameter of the recess 4 increases and at the same time the inner diameter of the recess 4 decreases. The recess 4 has an inner part inside the housing, which is cylindrically shaped, so that the conically shaped first portion of the body or cushioning element 3 can be arranged at this part. The body of the cushioning element 3 is shaped conically, tapering from the first front wall 7 in direction to the second front wall 8. The third portion 11, continuing from the first portion 9, is cylindrically shaped. A second portion is not provided for the same reasons mentioned before in relation to fig. 5.

### List of reference numbers

- **1**: cushioning arrangement
- **2**: housing
- **3**: cushioning element
- **4**: recess
- **5**: (circumferential) side wall
- **6**: bottom wall
- **7**: first front wall
- **8**: second front wall
- **9**: first portion
- **10**: second portion
- **11**: third portion
- **L**: longitudinal axis

- **d**: diameter (recess)
- **d1**: diameter (of first portion at front wall)
- **d2**: diameter (second portion)
- **d3**: diameter (third portion)
- **p**: pressure

## Claims

1. Cushioning element (3) for use in a recess (4) of a housing (2), comprising a deformable elastic oblong body with a surrounding wall, a first and a second front wall (7, 8) spaced along a longitudinal axis (L), suitable for being at least partly arranged in said recess (4), whereby the body is able to deform at least partly into said recess (4)
**characterized in,**
**that** the body in its unstressed, initial condition is arranged for gradually expanding substantially in radial direction when being stressed along its longitudinal axis (L) and limited by said recess (4), so that in its final condition a deformable body substantially shaped as said recess (4) is achieved.

2. Cushioning element (3) according to claim 1, **characterized in,**
**that** the body comprises at least a first portion (9), substantially conically shaped in the initial condition, starting at the first front wall (7) and tapering from the first front wall (7) towards the second front wall (8) of the body, being at least partly arranged in said recess (4).

3. Cushioning element (3) according to claim 1, **characterized in,**
**that** the body comprises at least a first portion (9), substantially cylindrically shaped in the initial condition, being at least partly arranged in said recess (4).

4. Cushioning element (3) according to one of the prior claims 1 to 3, **characterized in,**
**that** said body further comprises a second portion (10), in the initial condition shaped as a bolt head ending up in said second front wall (8) and having a larger cross-sectional area than the recess (4) of said housing (2) functioning as a stopper for limiting the deformation of said elastic body.

5. Cushioning element (3) according to one of the claims 1, 2 or 4, **characterized in,**
**that** said body further comprises a third portion (11), in the initial position cylindrically shaped, coaxially arranged between and coupling the first and the second portion (9, 10), whereby the third portion (11) is at least partly extruding from said recess (4) to the outside of said housing (2) for realizing a cushioning stroke, whereby the cross-sectional area of said third portion (11) is smaller than that of said recess (4).

6. Cushioning element (3) according to one of the prior claims 1 to 5, **characterized in, that** said body is shaped annularly having a through-going opening aligned with said longitudinal axis (L).

7. Cushioning arrangement (1) comprising a deformable element and a housing (2) with a recess (4) for at least partly accommodating said element, a circumferential side wall (5) surrounding that recess (4) in radial direction, and a bottom wall (6) for limiting said recess (4) in one longitudinal direction, whereby said deformable element is at least partly arranged in said recess (4) **characterized in,**
**that** said deformable element is a cushioning element (3) according to claims 1 to 6.

8. Cushioning arrangement (1) according to claim 7, **characterized in,**
**that** the recess (4) is substantially cylindrical and the body of the cushioning element (3) has a substantially conically shaped first portion (9) at least partly arranged in said recess (4).

9. Cushioning arrangement (1) according to claim 7, **characterized in,**
**that** the recess (4) is substantially conical and the body of the cushioning element (3) has a substantially cylindrically shaped first portion (9) at least partly arranged in said recess (4).

10. Cushioning arrangement (1) according to claims 7 to 9, **characterized in,**
**that** the first portion (9) of said cushioning element (3) is at least partly coaxially arranged in said recess (4) even when not being stressed, whereby the first front wall (7) of said cushioning element (3) contacts the bottom wall (6).

11. Cushioning arrangement (1) according to claims 7 to 10, **characterized in,**
**that** said first and/or third portion (11) in its initial condition at least partly extrudes from said recess (4), whereby the first and/or third portion (9, 11) is coaxially arranged to the longitudinal axis (L) of said recess (4).

12. Cushioning arrangement (1) according to claims 7 to 11, **characterized in,**
**that** said second portion (10) in its initial condition is spaced to and arranged completely outside the recess (4), whereby its diameter (*d*_{*2*}) or its cross-sectional area is larger than the diameter (d) or the cross-sectional area of the recess (4), regardless whether being stressed or not, so that the second portion (10) functions as a stopper.

13. Cushioning arrangement (1) according to claims 7 to 12, **characterized in,**
**that** said cushioning element (3) in its final condition is essentially shaped as the recess (4) when being arranged in said recess (4) and longitudinal stressed, so that at least the first and/or the third portion (9, 11) completely fill(s) the recess (4).

14. Fluid cylinder with final position cushioning comprising a cushioning arrangement (1) according to claims 7 to 13.
